# EUROPÄISCHE PATENTSCHRIFT

(11) **EP 0 954 455 B1**
(45) Veröffentlichungstag und Bekanntmachung des Hinweises auf die Patenterteilung: **14.08.2002**
(21) Anmeldenummer: 98954148.7
(22) Anmeldetag: 09.09.1998
(51) Int. Cl.: B60K 26/02, F16F 1/04, F16F 3/06, G05G 1/14

(54) **FAHRPEDALMODUL**
ACCELERATOR PEDAL MODULE
PEDALE D'ACCELERATEUR MODULAIRE

(30) Priorität: 21.11.1997 DE 19751520
(43) Veröffentlichungstag der Anmeldung: 10.11.1999
(73) Patentinhaber: ROBERT BOSCH GMBH, 70442 Stuttgart (DE)
(72) Erfinder: VELTE, Uwe, D-77833 Ottersweier (DE); PIERENKEMPER, Rolf, D-77830 Bühlertal (DE)
(86) Internationale Anmeldenummer: DE9802659
(87) Internationale Veröffentlichungsnummer: WO9926803

(56) Entgegenhaltungen:
- WO-A-88/08933
- WO-A-89/07706
- WO-A-97/12780
- DE-A- 3 411 455
- US-A- 4 397 069

## Beschreibung

### Stand der Technik

Die Erfindung geht aus von einem Fahrpedalmodul nach der Gattung des Anspruchs 1.

Es gibt bereits mehrere Veröffentlichungen (z. B. DE 34 11 455 Al; WO 89/07706; WO 97/12780), bei denen ein vom Fahrer des Kraftfahrzeugs betätigbarer Schwenkkörper vorgesehen ist, wobei die Stellung des Schwenkkörpers zur Feststellung der vom Fahrer gewünschten, von der Antriebsmaschine abzugebenden Leistung bestimmt wird. Zum Rückstellen des Schwenkkörpers in eine Ruhestellung ist eine Rückstellfeder vorgesehen. Damit unter allen Umständen, auch dann wenn ein Bruch bei der den Schwenkkörper in die Ruhestellung rückstellenden Rückstellfeder auftreten sollte, ein sicheres Zurückstellen des Schwenkkörpers gewährleistet bleibt, wird die Rückstellfeder üblicherweise doppelt vorgesehen. Damit bei einem Bruch einer der beiden Einzelfedern der Rückstellfeder die Rückstellkraft zum Rückstellen des Schwenkkörpers in die Ruhestellung ausreicht, muß die Rückstellfeder insgesamt wesentlich stärker dimensioniert sein, als für die Rückstellung des Schwenkkörpers erforderlich ist. Genauer gesagt, damit bei Bruch einer der beiden Einzelfedern der Rückstellfeder die Rückstellkraft zum Rückstellen des Schwenkkörpers ausreicht, muß die Gesamtrückstellkraft beider Rückstellfedern mehr als doppelt so groß wie erforderlich dimensioniert sein. Dies wird von vielen Benutzern des Fahrpedalmoduls als unangenehm empfunden. Ein weiterer Nachteil ist der große Platzbedarf für die beiden relativ großen Einzelfedern.

Um beim Betätigen des Schwenkkörpers ein möglichst angenehmes Gefühl für den Fahrer zu vermitteln, wird ein Reibelement vorgesehen, das einer Betätigung des Schwenkkörpers einen gewissen Reibwiderstand entgegensetzt. Der Aufwand zum Erzeugen des Reibwiderstands ist jedoch nicht vernachlässigbar und wegen häufig sehr beengter Raumverhältnisse schwer realisierbar.

Die Rückstellfeder bei den bekannten Ausführungen neigt leicht zum Schwingen. Dadurch entstehen häufig unangenehme, von der Rückstellfeder herrührende Geräusche. Manchmal wird versucht, durch Verändern der Baulänge der Rückstellfeder die Geräusche frequenzmäßig in einen unhörbaren Bereich zu verlegen. Dies hat jedoch andere, beispielsweise festigkeitsmäßige Nachteile. Manchmal wird auch zur Vermeidung der Geräusche ungefähr in die Mitte der Rückstellfeder ein Dämpfungselement eingelegt. Das Dämpfungselement wird beispielsweise zwischen einem Gehäuse und der Rückstellfeder oder zwischen den beiden Einzelfedern der Rückstellfeder vorgesehen. Das Einfügen dieses Dämpfungselements bedeutet jedoch einen zusätzlichen Aufwand, und zusätzlich besteht die Gefahr, daß das Dämpfungselement zwischen den Windungen der Rückstellfeder eingeklemmt wird, und dadurch kann es zu ungleichmäßiger Rückstellkraft der Rückstellfeder kommen. Das Dämpfungselement besteht beispielsweise aus an den Windungen der Rückstellfeder anliegendem Schaumstoff. Ein weiterer Nachteil ist, daß die Haltbarkeit und Wirksamkeit dieses Dämpfungselements begrenzt ist. Das Einbauen des Dämpfungselements zwischen die Federwindungen erfordert eine aufwendige, kaum automatisierbare Handarbeit.

### Vorteile der Erfindung

Das erfindungsgemäße Fahrpedalmodul mit den kennzeichnenden Merkmalen des Anspruchs 1 hat demgegenüber den Vorteil, daß die funktionssichere Arbeitsweise des Fahrpedalmoduls wesentlich erhöht wird. Auch bei einer eventuellen Beschädigung der Rückstellfeder vermindert sich die Rückstellkraft der Rückstellfeder nur geringfügig. Deshalb ist es vorteilhafterweise nicht erforderlich, die Rückstellfeder weit über das für die Rückstellung des Schwenkkörpers erforderliche Maß hinaus überzudimensionieren. Dadurch benötigt die Rückstellfeder besonders wenig Bauvolumen.

Durch die innere Reibung der Mehrdrahtfeder, d. h. durch die Reibung zwischen den Einzeldrähten der Mehrdrahtfeder, unterdrückt die Mehrdrahtfeder ihr eigenes Schwingen. Dadurch verursacht die Rückstellfeder wesentlich weniger bzw. keine Geräusche; und auch ein Federbruch infolge von Eigenschwingungen wird vermieden.

Weil die Schwingungsdämpfung innerhalb der Rückstellfeder erfolgt, erhält man den wesentlichen Vorteil, daß bei der Dimensionierung der Rückstellfeder keine bzw. kaum Rücksicht auf die Eigenfrequenz der Rückstellfeder genommen werden muß.

Dadurch, daß man bei dem erfindungsgemäß ausgeführten Fahrpedalmodul weniger Bauteile benötigt, weil insbesondere für die Rückstellfeder keine aus Sicherheitsgründen bisher erforderlichen zwei Einzelfedern und auch kein zusätzliches Dämpfungselement benötigt werden, vereinfacht sich der Aufwand für den Zusammenbau auf vorteilhafte Weise wesentlich. Insbesondere muß keine Vormontagebaugruppe gebildet werden.

Die innere Reibung in der Mehrdrahtfeder macht sich nicht nur durch geringere bzw. keine Geräusche bemerkbar, sondern durch diese Reibung ergibt sich auch ohne Zusatzaufwand vorteilhafterweise eine einer Bewegung des Schwenkkörpers entgegengerichtete Reibkraft, was ein besseres Gefühl bei Betätigung des Schwenkkörpers vermittelt. Dadurch kann vorteilhafterweise auf eine zusätzliche Reibeinrichtung verzichtet werden, bzw. die zusätzliche Reibeinrichtung kann kleiner dimensioniert sein.

Es ist kein zur Geräuschreduzierung erforderliches zusätzliches Dämpfungselement erforderlich, wodurch sich der Aufwand beim Zusammenbau des Fahrpedalmoduls vorteilhafterweise wesentlich verringert. Weil ein zusätzliches Dämpfungselement in der Vergangenheit gelegentlich zu Funktionsstörungen geführt hat, wird ohne Aufwand eine Gefahrenquelle für Funktionsstörungen auf vorteilhafte Weise beseitigt.

Durch die in den Unteransprüchen aufgeführten Maßnahmen sind vorteilhafte Weiterbildungen und Verbesserungen des im Hauptanspruch angegebenen Fahrpedalmoduls möglich.

Wird ein Teil der Einzeldrähte oder alle Einzeldrähte der Mehrdrahtfeder gegen ein Herauswandern aus der Mehrdrahtfeder gesichert, dann erhält man den Vorteil, daß auch bei zeitlich langer Wechselbeanspruchung der Rückstellfeder kein Herausschieben bzw. kein Herauswandern eines Einzeldrahtes aus der Mehrdrahtfeder befürchtet werden muß.

### Zeichnung

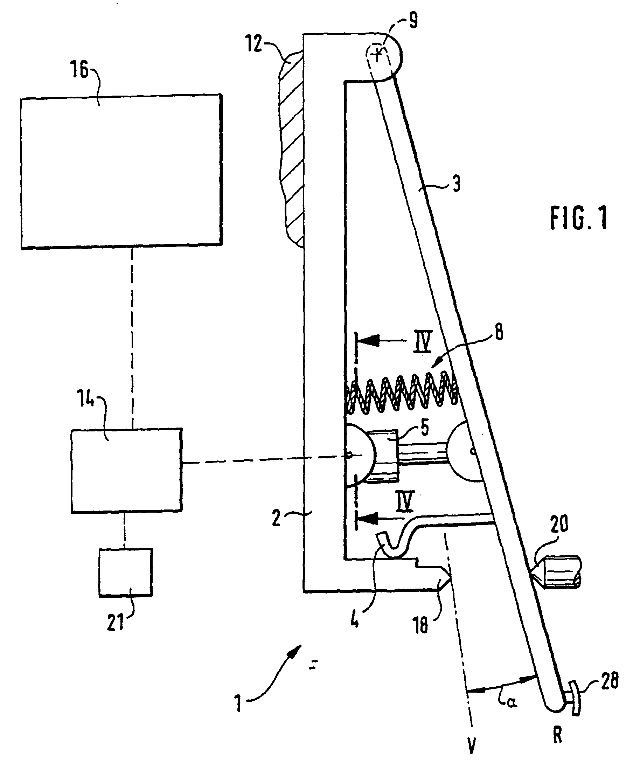

Bevorzugt ausgewählte, besonders vorteilhafte Ausführungsbeispiele der Erfindung sind in der Zeichnung vereinfacht dargestellt und in der nachfolgenden Beschreibung näher erläutert. Es zeigen die Figuren 1 bis 5 unterschiedlich ausgebildete, besonders vorteilhafte, ausgewählte Ausführungsbeispiele und Einzelheiten.

### Beschreibung der Ausführungsbeispiele

Das erfindungsgemäß ausgeführte Fahrpedalmodul kann zur Steuerung verschiedener Antriebsmaschinen verwendet werden. Die Antriebsmaschine ist beispielsweise ein Ottomotor, dessen Drosselklappe mit einem Stellmotor verstellt wird. In diesem Fall dient das Fahrpedalmodul beispielsweise zur Erzeugung von elektrischen Signalen, die dem die Drosselklappe verstellenden Stellmotor zugeführt werden. Die Antriebsmaschine kann aber auch beispielsweise ein Dieselmotor oder ein Elektromotor sein, wobei auch in diesen Fällen vom Fahrpedalmodul elektrische Signale ausgehen, die, entsprechend umgeformt, die Leistung der Antriebsmaschine steuern. Die Übertragung des Fahrerwunsches vom Fahrpedalmodul zur Antriebsmaschine kann aber auch rein mechanisch, beispielsweise über einen Seilzug oder über einen Bowdenzug, erfolgen.

Das Fahrpedalmodul ist vorzugsweise direkt im Aktionsbereich des Kraftfahrzeugführers eines Kraftfahrzeugs angeordnet. Der Schwenkkörper des Fahrpedalmoduls ist vorzugsweise das unmittelbar vom Fahrerfuß betätigte Gaspedal. Bei Bedarf ist es aber auch problemlos möglich, mit einfachen mechanischen Mitteln am Schwenkkörper des Fahrpedalmoduls ein separates Gaspedal oder einen sonstigen mechanischen Bedienhebel anzulenken.

Die Figur 1 zeigt in schematisierter Darstellungsweise ein Fahrpedalmodul 1. Das Fahrpedalmodul 1 umfaßt eine Haltestruktur 2, einen Schwenkkörper 3, eine Reibeinrichtung 4, einen Sensor 5, eine Rückstellfeder 8 und eine Lagerstelle 9.

Die Haltestruktur 2 ist vorzugsweise unmittelbar im Fußbereich eines Kraftfahrzeugführers an einem durch Schraffur in der Figur 1 symbolhaft dargestellten Chassis 12 befestigt. Der Schwenkkörper 3 wird vorzugsweise direkt vom Fahrerfuß betätigt; der Schwenkkörper 3 kann in diesem Fall auch die Bezeichnung Gaspedal erhalten. Es ist aber auch möglich, am Schwenkkörper 3 über ein einfaches Gestänge ein separates Gaspedal anzulenken.

Der Schwenkkörper 3 ist an der Lagerstelle 9 gegenüber der Haltestruktur 2 schwenkbar gelagert. Der Sensor 5 sensiert die Stellung des Schwenkkörpers 3 und liefert ein der Stellung des Schwenkkörpers 3 entsprechendes Signal über in der Figur 1 gestrichelt dargestellte elektrische Leitungen an eine Steuerung 14.

Der Sensor 5 ist einerseits an der Haltestruktur 2 und andererseits an dem Schwenkkörper 3 so angelenkt, daß der bewegliche Teil des Sensors 5 spielfrei jeder Bewegung des Schwenkkörpers 3 folgt.

In Abhängigkeit von den vom Sensor 5 sowie gegebenenfalls von weiteren an die Steuerung 14 gelieferten Signalen, steuert die Steuerung 14 die Leistung der in der Figur 1 symbolhaft dargestellten Antriebsmaschine 16. Die Antriebsmaschine 16 ist beispielsweise ein Ottomotor, ein Dieselmotor, ein Hybridmotor, ein Elektromotor oder dergleichen.

An der Haltestruktur 2 sind ein Vollastanschlag 18 und ein Ruheanschlag 20 vorgesehen. Wird der Schwenkkörper 3 vom Fahrzeugführer nicht betätigt, dann befindet sich der Schwenkkörper 3, getrieben von der Rückstellfeder 8, am Ruheanschlag 20. Diese Stellung wird nachfolgend als Ruhestellung R bezeichnet. Der Fahrzeugführer kann den Schwenkkörper 3 betätigen, bis der Schwenkkörper 3 am Vollastanschlag 18 zur Anlage kommt. Diese Stellung des Schwenkkörpers 3 am Vollastanschlag 18, wird nachfolgend als Vollaststellung V bezeichnet. Die Vollaststellung V des Schwenkkörpers 3 ist in der Figur 1 durch eine strichpunktierte Linie symbolhaft dargestellt.

Befindet sich der Schwenkkörper 3 in der Ruhestellung R, dann arbeitet die Antriebsmaschine 16 beispielsweise mit minimaler Leistung, sofern nicht aufgrund von Signalen eines Gebers 21 die Antriebsmaschine 16 mit höherer Leistung arbeitet. Der Schwenkkörper 3 ist über einen Betätigungswinkel alpha (α) verstellbar. Der Betätigungswinkel alpha (α) beträgt beispielsweise 15°.

Durch Schwenken des Schwenkkörpers 3 um die Lagerstelle 9 über den Betätigungswinkel alpha (α) kann der Fahrer den Schwenkkörper 3 von der Ruhestellung R in die Vollaststellung V betätigen. Bei Nichtbetätigung des Schwenkkörpers 3 sorgt die Rückstellfeder 8 dafür, daß der Schwenkkörper 3 in die Ruhestellung R gelangt. Aus Sicherheitsgründen muß gewährleistet sein, daß auch dann, wenn die Rückstellfeder 8 infolge eines Defekts nicht mit voller Kraft wirken kann, die verbleibende Kraft der Rückstellfeder 8 zum Rückstellen des Schwenkkörpers 3 in die Ruhestellung R ausreicht.

Die Rückstellfeder 8 befindet sich innerhalb eines Gehäuses, das in der Figur 1 der besseren Übersichtlichkeit wegen nicht dargestellt ist.

Die Rückstellfeder 8 ist eine Mehrdrahtfeder 8. Die Rückstellfeder 8, nachfolgend als Mehrdrahtfeder 8 bezeichnet, ist so ausgeführt, daß auch bei einer Beschädigung der Mehrdrahtfeder 8 eine ausreichend große Rückstellkraft zum Rückstellen des Schwenkkörpers 3 in seine Ruhestellung R gewährleistet ist.

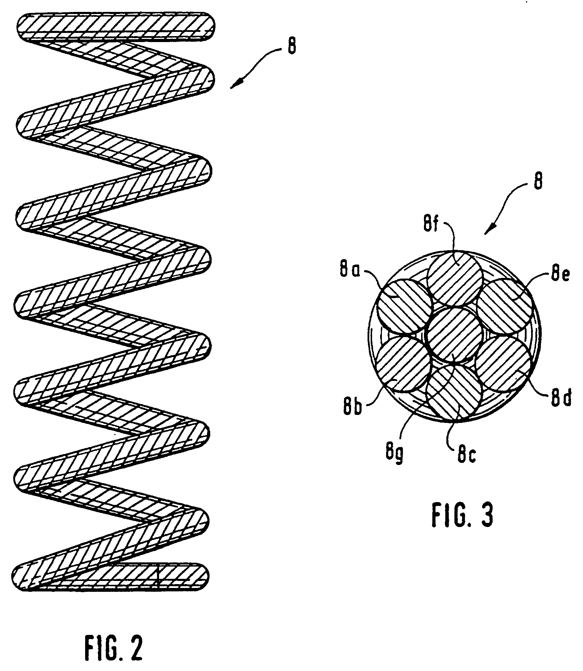

Die **Figuren 2 und 3** zeigen die Mehrdrahtfeder 8 als Einzelheit. Die Figur 2 zeigt eine Seitenansicht der Mehrdrahtfeder 8, und die Figur 3 zeigt eine Querschnittsfläche der Mehrdrahtfeder 8.

In allen Figuren sind gleiche oder gleichwirkende Teile mit denselben Bezugszeichen versehen. Sofern nichts Gegenteiliges erwähnt bzw. in der Zeichnung dargestellt ist, gilt das anhand eines der Figuren Erwähnte und Dargestellte auch bei den anderen Ausführungsbeispielen. Sofern sich aus den Erläuterungen nichts anderes ergibt, sind die Einzelheiten der verschiedenen Ausführungsbeispiele miteinander kombinierbar.

Die Mehrdrahtfeder 8 besteht aus mehreren verzwirnten Einzeldrähten. Wie die Figur 3 zeigt, besteht die bevorzugt ausgewählte Mehrdrahtfeder 8 aus einem ersten Einzeldraht 8a, einem zweiten Einzeldraht 8b, einem dritten Einzeldraht 8c, einem vierten Einzeldraht 8d, einem fünften Einzeldraht 8e, einem sechsten Einzeldraht 8f und aus einem siebten Einzeldraht 8g. Der siebte Einzeldraht 8g befindet sich zentrisch in der Querschnittsfläche der Mehrdrahtfeder 8. Um den siebten Einzeldraht 8g sind die anderen Einzeldrähte 8a bis 8f stramm herumgewickelt. Die Einzeldrähte 8a bis 8f sind schraubenförmig um den Einzeldraht 8g herumgewickelt. Die Einzeldrähte 8a bis 8g sind miteinander verzwirnt. Die Einzeldrähte 8a bis 8f sind so stramm auf den zentrischen Einzeldraht 8g gewickelt, daß hohe Reibkräfte zwischen den Einzeldrähten 8a bis 8g übertragen werden können. D. h., die Einzeldrähte 8a bis 8g können nur mit erhöhter Kraft gegeneinander verschoben werden. Durch mehr oder weniger strammes Wickeln der Einzeldrähte 8a bis 8g können die Reibkräfte in gewünschter Weise beeinflußt werden. In der Seitenansicht ergibt sich ein Anblick ähnlich wie bei einem verzwirnten Seil.

Die für das in der Figur 1 dargestellte Ausführungsbeispiel geeignete und in der Figur 2 als Einzelheit dargestellte, aus den Einzeldrähten 8a bis 8g gezwirnte Mehrdrahtfeder 8 ist als Ganzes wie eine Schraubenfeder gewickelt. Bei Beaufschlagung der beiden Enden der Mehrdrahtfeder 8 wird der gesamte Materialquerschnitt der Mehrdrahtfeder 8 auf Torsion belastet. Dies führt zu Relativverschiebungen zwischen den Einzeldrähten 8a bis 8g. Weil die Einzeldrähte 8a bis 8g jedoch aufeinander bzw. umeinander gewickelt bzw. verzwirnt sind, und dadurch Querkräfte zwischen den Einzeldrähten 8a bis 8g übertragen werden, entstehen zwischen den Einzeldrähten 8a bis 8g Reibkräfte, die dämpfend wirken, was zu einer Dämpfung von Schwingungen der Mehrdrahtfeder 8 führt. Dadurch kann ein Eigenschwingen der Mehrdrahtfeder 8 sicher verhindert werden. Dadurch ist sichergestellt, daß keine oder nur stark gedämpft von der Mehrdrahtfeder 8 herrührende Geräusche entstehen.

Die Reibung zwischen den Einzeldrähten 8a bis 8g der Mehrdrahtfeder 8 führt auch dazu, daß bei Betätigung des Schwenkkörpers 3 (Fig. 1) eine von der Mehrdrahtfeder 8 ausgehende, der Bewegung des Schwenkkörpers 3 entgegengerichtete Reibkraft auf den Schwenkkörper 3 wirkt.

Dadurch entsteht bei Bewegung des Schwenkkörpers 3 eine gewünschte Hysterese. Deshalb kann auf die Reibeinrichtung 4 (Fig. 1) verzichtet werden, oder die Reibeinrichtung 4 kann entsprechend schwächer und dadurch einfacher und bauvolumenmäßig kleiner ausgeführt werden.

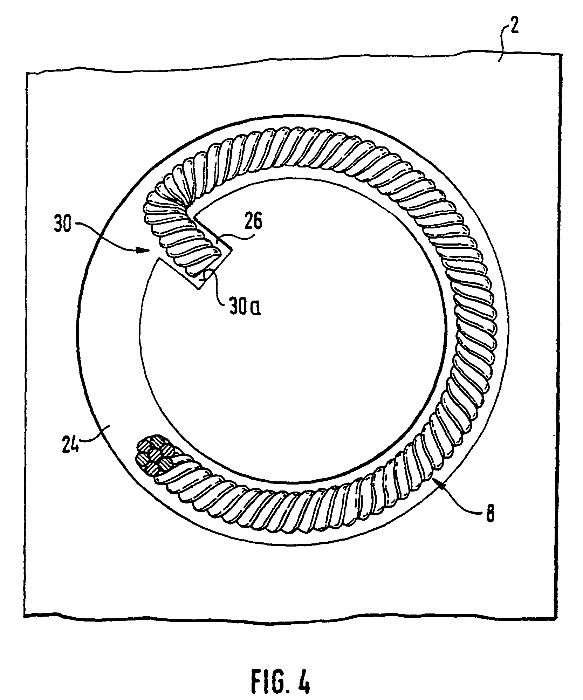

Die **Figur 4** zeigt einen Querschnitt durch die Mehrdrahtfeder 8 mit Blickrichtung auf die Haltestruktur 2. Die Schnittebene ist in der Figur 1 durch eine strichpunktierte Linie und die Blickrichtung ist durch einen mit IV bezeichneten Pfeil angedeutet.

An der Haltestruktur 2 ist stirnseitig eine umlaufende Nut 24 vorgesehen. In die Nut ist das an der Haltestruktur 2 angreifende Federende der Mehrdrahtfeder 8 eingesetzt. Quer zur umlaufenden Nut 24 ist eine Quernut 26 vorgesehen. Die Quernut 26 hat einen Nutgrund. Der Nutgrund bildet eine Anlauffläche 30a. Das Ende der Mehrdrahtfeder 8 ist so abgewinkelt, daß es in die Quernut 26 hineinragt. Die Mehrdrahtfeder 8 endet im Bereich der Anlauffläche 30a oder unmittelbar an der Anlauffläche 30a. Die Anlauffläche 30a bildet eine Rückhaltesicherung 30. Anstatt in einer Quernut kann die Anlauffläche 30a der Rückhaltesicherung 30 beispielsweise auch direkt am Nutgrund der umlaufenden Nut 24 vorgesehen sein. Bei dieser nicht bildlich dargestellten Ausführungsvariante ist ein Abwinkeln des Endes der Mehrdrahtfeder 8 nicht erforderlich.

Bei Belastungsänderungen der Mehrdrahtfeder 8 werden zwischen den Einzeldrähten 8a bis 8g Reibkräfte übertragen. Dies kann dazu führen, daß einer der Einzeldrähte 8a bis 8g oder mehrere der Einzeldrähte 8a bis 8g sehr langsam aber beständig in eine Richtung verschoben wird. Deshalb kann es vorkommen, daß der eine oder andere der Einzeldrähte 8a bis 8g langsam aus dem stirnseitigen Ende der Mehrdrahtfeder 8 herauszuwandern bestrebt ist. Das stirnseitige Herauswandern eines oder mehrerer der Einzeldrähte 8a bis 8g aus der Mehrdrahtfeder 8 wird durch die Rückhaltesicherung 30 verhindert. Ein herauswandernder Einzeldraht kann nur so weit herauskommen, bis er an der Anlauffläche 30a anliegt. Bezogen auf die Gesamtlänge der Mehrdrahtfeder 8 ist ein geringfügiges Herauswandern eines Einzeldrahtes unerheblich, weshalb bei der Rückhaltesicherung 30 auch grobe, leicht einzuhaltende Maßtoleranzen zugelassen werden können.

Es wird vorgeschlagen, das am Schwenkkörper 3 angelenkte Federende der Mehrdrahtfeder 8 ebenso auszubilden, wie es anhand dem der Haltestruktur 2 zugewandten Federende erläutert ist.

Es ist auch möglich, das stirnseitige Herauswandern der Einzeldrähte 8a bis 8g dadurch zu verhindern, daß man an mindestens einem Ende der Mehrdrahtfeder 8 mindestens einen Teil der Einzeldrähte 8a bis 8g gegenseitig fest miteinander verbindet. Die Einzeldrähte 8a bis 8g können beispielsweise durch Verschweißen an einem Federende fest miteinander verbunden werden. Weil das feste Verbinden der Einzeldrähte 8a bis 8g an mindestens einem Federende jedoch einen zusätzlichen Arbeitsgang erfordert, wird auf die vorgeschlagene Rückhaltesicherung 30 (Fig. 4) als günstige Sicherungsmöglichkeit verwiesen.

Weil der mittlere Einzeldraht 8g (Fig. 3) besonders häufig herauszuwandern versucht, muß die Rückhaltesicherung 30 so gestaltet sein, daß sie zumindest diesen Einzeldraht 8g zurückhält. Je nach Art des Wickelns der Mehrdrahtfeder 8 kann die Mehrdrahtfeder 8 gegebenenfalls auch ohne den mittleren Einzeldraht 8g gewickelt werden.

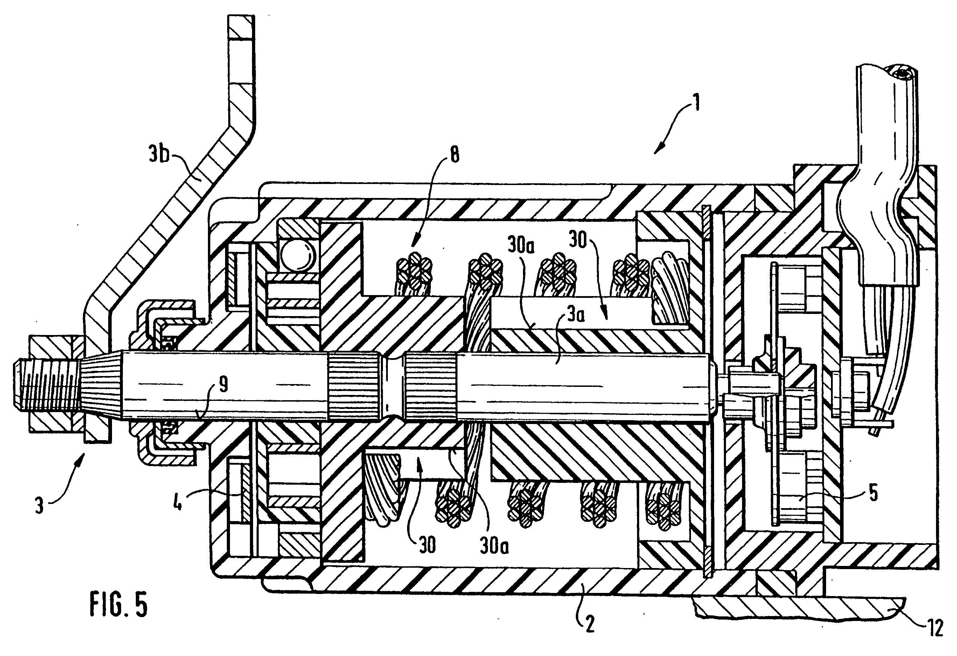

Die **Figur 5** zeigt ein ausgewähltes weiteres, besonders vorteilhaftes Ausführungsbeispiel.

Grob betrachtet, ist bei der in der Figur 5 dargestellten Ausführung die Haltestruktur 2 ein hohlzylindrisches Gebilde, in dem der Schwenkkörper 3 drehbar gelagert ist. Der Schwenkkörper 3 besteht im wesentlichen aus einer schwenkbar gelagerten Welle 3a und einem mit der Welle 3a fest verbundenen Hebel 3b.

Das in der Figur 4 dargestellte Fahrpedalmodul 1 ist bis auf die nachfolgend genannten Unterschiede, die im wesentlichen die Rückstellfeder 8 betreffen, gleich aufgebaut, wie es in der deutschen Offenlegungsschrift DE 34 11 455 Al und in der davon abgeleiteten französischen Offenlegungsschrift FR 25 62 010 A und in dem abgeleiteten italienischen Patent IT 11 84 195 A ausführlich beschrieben ist, so daß nachfolgend im wesentlichen nur auf die gegenüber der DE 34 11 455 Al bestehenden Unterschiede eingegangen wird, um ein unnötiges Wiederholen von bereits Bekanntem zu vermeiden.

Im Unterschied zum durch die genannten Schriften bekannten Fahrpedalmodul wird bei dem erfindungsgemäß ausgeführten Fahrpedalmodul 1 (Fig. 5) eine aus mehreren, vorzugsweise aus mindestens drei, besonders vorzugsweise aus sieben Einzeldrähten 8a bis 8g (Fig. 3) gezwirnte Mehrdrahtfeder 8 verwendet. Die Rückstellfeder 8 ist, wie in der DE 34 11 455 Al ausführlich beschrieben und dargestellt, einerseits an der Haltestruktur 2 und andererseits am Schwenkkörper 3 angelenkt. Obwohl im Unterschied zum durch die DE 34 11 455 Al bekannten Fahrpedalmodul beim erfindungsgemäß ausgeführten Fahrpedalmodul 1 als Rückstellfeder 8 nur die eine Mehrdrahtfeder 8 verwendet wird, ergibt sich trotzdem eine hohe Sicherheit auch dann, wenn ein Teil der Einzeldrähte 8a bis 8g der Mehrdrahtfeder 8 versagen sollte.

Weil die Mehrdrahtfeder 8 aus einer Vielzahl von Einzeldrähten 8a bis 8g besteht, sinkt bei einem eventuellen Bruch eines der Einzeldrähte 8a bis 8g die Rückstellkraft nur um einen relativ kleinen Betrag. Weil gegenüber dem bekannten Fahrpedalmodul nur die eine Mehrdrahtfeder 8 zum Erreichen der geforderten Rückstellsicherheit erforderlich ist, muß die Gesamtrückstellkraft der Rückstellfeder 8 weniger stark überdimensioniert werden, weshalb erreicht werden kann, daß das erfindungsgemäß ausgeführte Fahrpedalmodul 1 kleiner als das durch die DE 34 11 455 Al bekannte Fahrpedalmodul gebaut werden kann.

Bei dem Ausführungsbeispiel gemäß Figur 5 wird die Mehrdrahtfeder 8 bei Betätigung des Hebels 3b des Schwenkkörpers 3 mit Torsionskräften beaufschlagt. Dies führt zu einer Biegebeanspruchung des Materialquerschnitts der Mehrdrahtfeder 8. Dadurch entstehen Relativbewegungen zwischen den Einzeldrähten 8a bis 8g der Mehrdrahtfeder 8. Durch diese Relativbewegung entsteht Reibung zwischen den Einzeldrähten 8a bis 8g der Mehrdrahtfeder 8. Infolge dieser Reibung werden Schwingungen der Mehrdrahtfeder 8 verhindert oder zumindest so stark gedämpft, daß keine störenden Eigenschwingungen und damit keine störenden Geräusche entstehen.

Weil die Reibung zwischen den Einzeldrähten 8a bis 8g der Mehrdrahtfeder 8 einer Bewegung des Schwenkkörpers 3 entgegengerichtet ist, in gleicher Weise wie die Reibeinrichtung 4, deren Funktionsweise in der DE 34 11 455 Al ausführlich beschrieben ist, kann die Reibung zwischen den Einzeldrähten 8a bis 8g die Reibeinrichtung 4 ersetzen oder zumindest unterstützen.

Deshalb kann die Reibeinrichtung 4 gegenüber dem durch die DE 34 11 455 Al bekannten Stand der Technik schwächer und somit volumenmäßig kleiner und einfacher ausgeführt werden bzw. es kann auf die Reibeinrichtung 4 vollständig verzichtet werden.

Damit die Einzeldrähte 8a bis 8g nicht stirnseitig aus der Mehrdrahtfeder 8 herauswandern können, ist auch bei dem in der Figur 5 gezeigten Ausführungsbeispiel, dort wo die Mehrdrahtfeder 8 an der Haltestruktur 2 und dort wo die Mehrdrahtfeder 8 an dem Schwenkkörper 3 angelenkt ist, jeweils die Rückhaltesicherung 30 mit der Anlauffläche 30a vorgesehen.

## Patentansprüche

1. Fahrpedalmodul zum Steuern einer von einer Antriebsmaschine abgegebenen Leistung, mit einem an einer Lagerstelle (9) an einer Haltestruktur (2) gelagerten um eine Schwenkachse über einen Schwenkwinkel (α) schwenkbaren Schwenkkörper (3), wobei eine zumindest mittelbar an der Haltestruktur (2) und zumindest mittelbar an dem Schwenkkörper (3) angreifende Rückstellfeder (8) zum Rückstellen des Schwenkkörper (3) in eine Ruhestellung (R) vorgesehen ist, **dadurch gekennzeichnet, daß** die Rückstellfeder (8) eine aus mehreren Einzeldrähten (8a - 8g) gezwirnte Mehrdrahtfeder (8) ist.

2. Fahrpedalmodul nach Anspruch 1, **dadurch gekennzeichnet, daß** die Mehrdrahtfeder (8) mit Druckkräften beaufschlagt wird.

3. Fahrpedalmodul nach Anspruch 2, **dadurch gekennzeichnet, daß** die Mehrdrahtfeder (8) eine Druckfeder ist, wobei die Einzeldrähte (8a - 8g) auf Torsion belastet werden.

4. Fahrpedalmodul nach Anspruch 1, **dadurch gekennzeichnet, daß** die Mehrdrahtfeder (8) mit Torsionskräften beaufschlagt wird.

5. Fahrpedalmodul nach Anspruch 4, **dadurch gekennzeichnet, daß** die Mehrdrahtfeder (8) eine Drehfeder ist, wobei die Einzeldrähte (8a - 8g) auf Biegung belastet werden.

6. Fahrpedalmodul nach einem der vorhergehenden Ansprüche, **dadurch gekennzeichnet, daß** mindestens ein Teil der Einzeldrähte (8a - 8g) durch eine Rückhaltesicherung (30) gegen ein Herauswandern aus der Mehrdrahtfeder (8) gesichert ist.

7. Fahrpedalmodul nach einem der vorhergehenden Ansprüche, **dadurch gekennzeichnet, daß** mindestens ein Teil der Einzeldrähte (8a - 8g) an mindestens einem Ende der Mehrdrahtfeder (8) gegen gegenseitiges Verschieben miteinander verbunden sind.

## Claims

1. Accelerator pedal module for controlling power which is output by a drive machine, having a pivot element (3) which is mounted at a bearing point (9) on a holding structure (2) so as to pivot through a pivot angle (α) about a pivot axis, a restoring spring (8) which engages at least indirectly on the holding structure (2) and at least indirectly on the pivot element (3) being provided for restoring the pivot element (3) into its position of rest (R) **characterized in that** the restoring spring (8) is a multi-wire spring (8) formed by twisting together a plurality of individual wires (8a - 8g).

2. Accelerator pedal module according to Claim 1 **characterized in that** the compressive forces are applied to the multi-wire spring (8).

3. Accelerator pedal module according to Claim 2 **characterized in that** the multi-wire spring (8) is a compression spring, the individual wires (8a - 8g) being subject to torsional loading.

4. Accelerator pedal module according to Claim 1 **characterized in that** torsional forces are applied to the multi-wire spring (8).

5. Accelerator pedal module according to Claim 4 **characterized in that** the multi-wire spring (8) is a rotary spring, the individual wires (8a - 8g) being subjected to bending loading.

6. Accelerator pedal module according to one of the preceding claims **characterized in that** at least some of the individual wires (8a - 8g) are protected against migrating out of the multi-wire spring (8) by a restraint device (30).

7. Accelerator pedal module according to one of the preceding claims, **characterized in that** at least some of the individual wires (8a - 8g) are connected to one another at at least one end of the multi-wire spring (8) to prevent displacement with respect to one another.

## Revendications

1. Module de pédale d'accélérateur pour la commande d'une puissance délivrée par une machine d'entretien avec une pièce pivotante (3) articulée par un palier (9) à une structure de support (2) autour d'un axe de pivotement pouvant pivoter d'un angle (α), dans lequel on prévoit un ressort de rappel en prise au moins avec la structure de support (2) et au moins indirectement avec la pièce pivotante (3) pour le rappel de la pièce pivotante (3) en une position de repos (R),
**caractérisé en ce que**
le ressort de rappel (8) est un ressort multifilaire torsadé composé de plusieurs brins (8a-8g).

2. Module de pédale d'accélérateur selon la revendication 1,
**caractérisé en ce que**
le ressort filaire (8) est chargé en force de pression.

3. Module de pédale d'accélérateur selon la revendication 2,
**caractérisé en ce que**
le ressort filaire (8) est un ressort de pression, les brins (8a-8g) étant chargé en torsion.

4. Module de pédale d'accélérateur selon la revendication 1,
**caractérisé en ce que**
le ressort filaire (8) est chargé en forces de torsion.

5. Module de pédale d'accélérateur selon la revendication 4,
**caractérisé en ce que**
le ressort de torsion (8) est un ressort de torsion, les brins (8a-8g) étant chargés en flexion.

6. Module de pédale d'accélérateur selon l'une quelconque des revendications précédentes,
**caractérisé en ce qu'**
au moins une partie des brins (8a-8g) sont bloqués contre la sortie du ressort filaire (8) par une sécurité de retrait (30).

7. Module de pédale d'accélérateur selon l'une quelconque des revendications précédentes,
**caractérisé en ce qu'**
au moins une partie des brins (8a-8g) sont reliés entre eux à l'une des extrémités du ressort filaire (8) pour éviter un coulissement réciproque.
